Europäisches Patentamt

European Patent Office

Office européen des brevets

(19)

(11) Numéro de publication : **0 064 119**
**B1**

(12) **FASCICULE DE BREVET EUROPÉEN**

(45) Date de publication du fascicule du brevet :
**28.08.85**

(51) Int. Cl.⁴ : **H 04 B   1/66, H 04 B  14/04**

(21) Numéro de dépôt : **81430011.7**

(22) Date de dépôt : **30.04.81**

(54) **Perfectionnement aux procédés de codage de la voix et dispositif de mise en oeuvre du procédé perfectionné.**

(43) Date de publication de la demande :
**10.11.82 Bulletin 82/45**

(45) Mention de la délivrance du brevet :
**28.08.85 Bulletin 85/35**

(84) Etats contractants désignés :
**DE FR GB**

(56) Documents cités :
**EP-A- 0 059 294**
**FR-A- 2 389 277**
**ELECTRONICS LETTERS, vol. 9, no. 14, 12 juillet 1973, pages 298-300, London (GB); M.G. CROLL et al.: " 'Nearly instantaneous' digital compandor for transmitting six sound-programme signals in a 2-048 Mbit/s multiplex"**
**ICASSP 80 PROCEEDINGS-IEEE INTERNATIONAL CONFERENCE ON ACOUSTICS, SPEECH AND SIGNAL PROCESSING, vol. 2, pages 323-326, New York (USA); S.K. DAS: "A technique for speech coding using dynamic programming"**

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Beraud, Jean-Paul**
**239 Avenue des Filagnes**
**La Roseraie F-06700 Saint Laurent du Var (FR)**
Inventeur : **Esteban, Daniel**
**Villa La Feynière**
**Quartier Le Peymond F-06610 La Gaude (FR)**
Inventeur : **Galand, Claude**
**56 Avenue des Tuilières**
**F-06800 Cagnes Sur Mer (FR)**

(74) Mandataire : **Tubiana, Max**
**Compagnie IBM France Département de Propriété Industrielle**
**F-06610 La Gaude (FR)**

**0 064 119**

**Description**

Domaine Technique de l'Invention

La présente invention traite de techniques de codage en numérique d'un signal vocal notamment destiné à être transmis.

Etat de la Technique

La traduction en numérique (codage) d'un signal variant dans le temps se fait par prélèvement d'échantillons et quantification desdits échantillons. Ceci suppose le découpage préalable en tranches de l'échelle de mesure des amplitudes du signal, et l'attribution d'une valeur numérique unique à chacune desdites tranches. Lors de l'opération de quantification, c'est-à-dire de conversion des échantillons du signal en valeurs numériques, tous les échantillons du signal dont l'amplitude se situe dans les limites d'une même tranche sont codés avec la même valeur numérique. Il en résulte naturellement une transcription infidèle se traduisant par une erreur entre le signal d'origine et son expression codée. On dit alors que les opérations réalisées engendrent un bruit de quantification. Il est évident qu'un affinement des tranches contribue à une réduction dudit bruit. Mais cela suppose, pour des limites de variation d'amplitude données de l'échelle de mesure, une augmentation du nombre de tranches, donc du nombre de valeurs numériques permettant de coder lesdites tranches, et par voie de conséquence, du nombre de bits à utiliser pour définir numériquement les tranches. Il en résulte une complication des dispositifs destinés à traiter ultérieurement le signal exprimé numériquement, et aussi, lorsque le signal doit être transmis d'un poste d'émission à un poste de réception, un encombrement des canaux de transmission du signal. On a donc cherché à réduire le taux de bits nécessaire au codage, tout en assurant l'obtention d'un rapport signal sur bruit convenable. Ou inversement, une fois défini le taux de bits global alloué à la quantification, on a cherché à en assurer une utilisation rationnelle permettant de minimiser le bruit.

Ces recherches sont à l'origine de procédés de codage dits différentiels ou delta PCM dans lesquels les bits de quantification sont utilisés au codage des incréments du signal entre deux instants d'échantillonnage consécutifs et non à la totalité de l'amplitude de chaque échantillon. La dynamique de l'information à quantifier étant alors plus réduite, il en résulte une meilleure utilisation des bits de quantification par découpage de l'échelle de mesure en tranches plus fine qu'elles ne l'auraient été si on avait utilisé le même nombre de bits pour coder directement les échantillons du signal tel que fourni initialement.

Ces procédés ont par la suite eux-mêmes été perfectionnés en tenant compte des caractéristiques statistiques du signal à coder. Par exemple, constatant que pour des signaux d'origine vocale le spectre de fréquences dans lequel ceux-ci se situent est relativement limité et que l'énergie de ces signaux se concentre généralement dans les zones de fréquences basses du spectre de la voix, on a proposé de scinder ce spectre et d'accorder plus de bits, à la quantification des zones basses fréquences, donc de coder les signaux qui s'y trouvent avec plus de précision que ceux situés dans les bandes hautes. On peut citer à titre d'exemple de réalisation de ce type, la réalisation décrite par Crochiere et al dans un article publié dans le Bell System Technical Journal d'octobre 1976. Le signal vocal y est tout d'abord filtré par un banc de filtres passe-bande adjacents couvrant toute la gamme téléphonique. Les signaux résultants, sont ramenés en bande de base par modulation et échantillonnés à leur fréquence de Nyquist. Puis chaque signal (ou sous-bande) est quantifié(e) séparément, de manière non uniforme, c'est-à-dire en allouant plus de bits aux bandes basses qu'aux bandes élevées. Une étude statistique permet de choisir différents taux de bits de quantification et de définir une répartition convenable desdits bits, entre les sous-bandes. Ce type de codage s'appuie cependant sur des données statistiques et non sur des situations réelles, et donc n'offre pas un moyen de codage optimal.

Dans d'autres systèmes, les qualités du codage du signal ont été améliorées en ne basant plus l'allocation de bits sur des résultats statistiques, mais sur des données réelles déterminées directement à partir des caractéristiques du signal à coder.

Dans ce cas, pour éviter que le codeur ne devienne trop complexe et donc que le système de codage et décodage ne perde de son intérêt sur le plan pratique, il a fallu faire appel à des techniques telles que celle décrite dans le brevet français No 77 13995 délivré à la demanderesse sous le titre « Procédé de quantification à allocation dynamique du taux de bits disponibles, et dispositif de mise en œuvre dudit procédé » et publié sous le numéro 2389277. Ce procédé est appliqué essentiellement au codage de type dit BCPCM où le signal est codé par tronçons de durée prédéterminée (K échantillons par tronçon). Le signal est en outre scindé en p sous-gammes (ou sous-bandes) dans le domaine des fréquences et chaque sous-gamme est codée séparément et selon ses propres caractéristiques. Plus précisément le nombre de bits $n^i$ à allouer à la quantification du signal de la $i^{ième}$ sous-gamme est fixé pour K échantillons d'un bloc ou tronçon donné à partir des caractéristiques desdits K échantillons. En d'autres termes, le procédé décrit dans le brevet français No 77 13995 permet une certaine optimisation de la répartition des ressources du système de codage et notamment une utilisation rationnelle de ces ressources basée sur les caractéristiques du signal à coder.

Pour plus de précision sur le codage du type BCPCM on pourra se reporter à l'article de A. Croisier relatif à une présentation faite au Séminaire International de Communications Numériques 1974 à Zurich sous le titre « Progress in PCM and Delta Modulation : Block Companded Coding of Speech Signal ». Le procédé décrit dans l'article de A. Croisier peut être résumé comme suit : le signal à coder est tout d'abord échantillonné puis l'on découpe le flot d'échantillons obtenu en tronçons successifs de durée donnée, ou blocs de K échantillons et on quantifie chacun desdits blocs. Pour ce faire, on attribue à chaque bloc un facteur d'échelle « C » tel que le plus grand échantillon du bloc ne puisse tomber en dehors des limites du codage. On quantifie ensuite le facteur d'échelle et les K échantillons du bloc. L'ensemble constitué par le facteur d'échelle C (ou caractéristique du bloc) et les K échantillons du bloc, une fois quantifiés, fournit l'information numérique définissant complétement le bloc d'échantillons.

Dans la demande de brevet français No 77 13995 on a montré comment les qualités du codage de la voix pouvaient être améliorées et le bruit de quantification du signal d'origine vocale réduit, en distribuant dynamiquement et de manière rationnelle les bits disponibles pour opérer ladite quantification. Pour ce faire, l'ensemble du signal vocal est réparti entre plusieurs sous-bandes dans le domaine des fréquences, et le contenu de chaque sous-bande est codé en BCPCM. Ce procédé permet une meilleure utilisation des bits de quantification. Mais que le signal soit réparti entre plusieurs sous-bandes ou pas, le codage en BCPCM ne permet pas d'attribuer tous les bits de codage disponibles à la quantification des échantillons du signal proprement dits. En effet, les facteurs d'échelle associés aux blocs d'échantillons doivent eux aussi être quantifiés. En outre, l'importance du facteur d'échelle pour le décodage du signal est telle qu'il est quasi nécessaire de le protéger notamment en lui associant un (ou plusieurs) bit(s) de parité. Ceci réduit encore les bits disponibles pour la quantification des échantillons proprement dits. On peut naturellement réduire l'incidence de la présence du facteur d'échelle sur la quantité de bits restant disponibles pour la quantification des échantillons de signal proprement dit, en allongeant la durée de chaque tronçon ou, en d'autres termes, en traitant des blocs comportant un nombre élevé d'échantillons. Par exemple, au lieu de traiter des blocs représentant 16 ms de signal, on pourrait choisir des blocs de 32 ms, ce qui réduirait d'un facteur deux le nombre de facteurs d'échelle à quantifier. Cependant, cette solution entraîne des effets secondaires qui, au décodage, font apparaître des sons parasites ressemblant à des échos de niveaux relativement faibles.

## Exposé de l'Invention

La présente invention a pour objet un perfectionnement au procédé de codage du type dit BCPCM.

Un autre objet de l'invention est de fournir un procédé de codage du type BCPCM d'un signal (notamment d'origine vocale) dont le spectre s'étend sur une bande de fréquences prédéterminée et relativement limitée, procédé permettant d'accroître le nombre des bits disponibles pour la quantification des échantillons de signal proprement dit, tout en minimisant au mieux les effets secondaires néfastes qui pourraient en découler.

La présente invention a encore pour objet un dispositif permettant la mise en œuvre du procédé décrit ci-dessus.

Plus précisément ladite invention concerne un procédé de codage en BCPCM du signal vocal comportant une analyse de l'évolution des caractéristiques du signal à coder, analyse permettant d'attribuer à chaque bloc d'échantillons à traiter, la qualification de bloc transitoire ou de bloc stationnaire, de déduire de ladite qualification le nombre de facteurs d'échelle à associer audit bloc, d'où l'on dérive le nombre de bits nécessaires à la quantification du (ou des) dit(s) facteur(s) d'échelle avant de procéder à la quantification des échantillons de signal proprement dits à l'aide des bits de quantification restant disponibles pour le bloc considéré.

D'autres objets, caractéristiques et avantages de la présente invention ressortiront mieux de l'exposé qui suit, fait en référence aux dessins annexés à ce texte, qui représentent un mode de réalisation préféré de celle-ci.

## Description des Figures

Figures 1 & 4   dispositifs de transmission permettant la mise en œuvre du procédé de l'invention.
Figure 2   mode de réalisation de l'un des éléments de la figure 1.
Figure 3   détail de réalisation d'un circuit destiné au dispositif de la figure 2.
Figure 5   détail de réalisation d'un circuit de l'invention.
Figure 6   courbe logarithmique pour transcodage de facteurs d'échelle de 12 bits en quatre bits.

## Description Détaillée d'un Mode de Réalisation de l'Invention

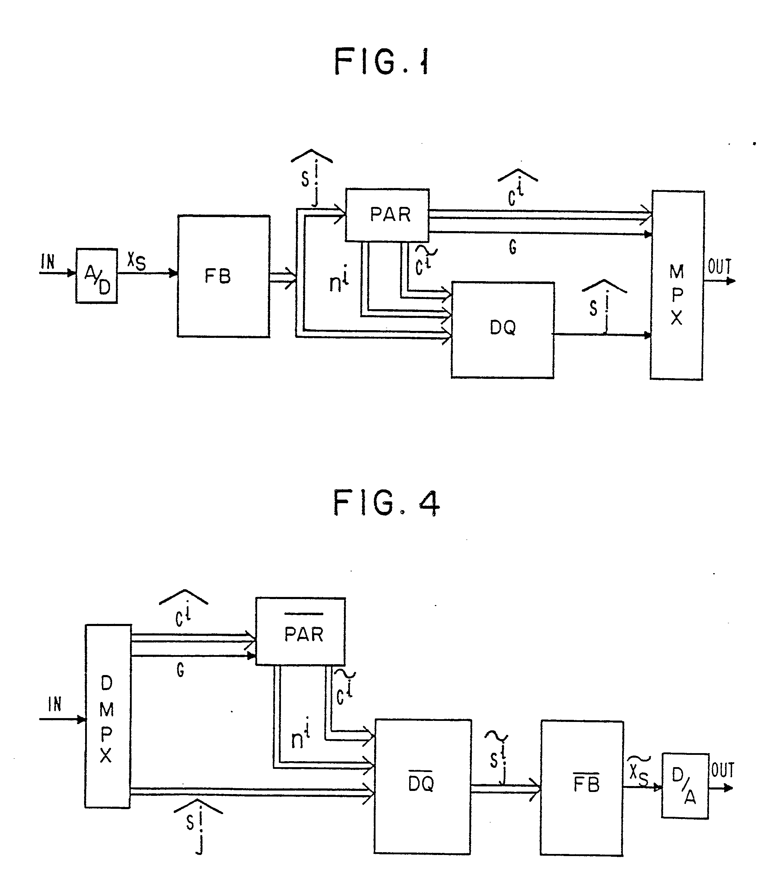

La figure 1 représente un dispositif de codage en sous-bandes du signal d'origine vocale, dispositif utilisé dans un système de transmission multiplex. Un système semblable à celui de la figure 1 a déjà été décrit dans la demande de brevet européen No 81430004.2, intitulée : « Perfectionnement aux procédés · de transmission et dispositif de mise en œuvre du procédé perfectionné » déposée par la demanderesse le 27 février 1981 et publié le 8 septembre 1982 sous le numéro 0059294. Le signal d'origine vocale s'étendant sur une bande basses fréquences allant jusqu'à 4 kHz environ se présente à l'entrée IN. Il est échantillonné en A/D à sa fréquence de Nyquist, soit 8 kHz et codé en PCM conventionnel à 12 bits à l'aide du même dispositif A/D. Les échantillons $X_s$ issus de A/D sont transmis à un banc de filtres FB. Celui-ci répartit le signal entre p sous-bandes contenant les échantillons $S_j^i$ (où i = 1, 2, 3, ..., p désigne le rang de la sous-bande à laquelle appartient l'échantillon considéré et où j = 1, 2, ..., K' désigne un paramètre qui sera défini plus loin). Les échantillons $S_j^i$, initialement quantifiés à 12 bits sont ensuite requantifiés à des taux de bits plus faibles. Cependant ces nouveaux taux de bits sont dynamiquement ajustés aux caractéristiques (énergie) du signal contenu dans la sous-bande considérée durant un intervalle de temps de durée prédéterminée (codage par blocs). Pour ce faire, les sous-bandes issues du banc de filtres FB sont envoyées dans un générateur de paramètres PAR et dans un dispositif de requantification DQ. Le générateur de paramètres PAR fournit au dispositif DQ des paramètres $n^i$ et $C^i$. Le $n^i$ définit le taux de bits à allouer à la requantification de la $i^{ème}$ sous-bande et ce pour ladite durée prédéterminée. Ledit taux de bits obéit à la relation :

$$n^i = 1/p \left[ N - \sum_{j=1}^{p} \log C^j \right] + \log C^i \tag{1}$$

où N est le nombre total des bits réservés à la requantification des échantillons de l'ensembles des p sous-bandes ; et où les coefficients C désignent des facteurs dits d'échelle définis plus loin.

Les valeurs de $n^i$ et $C^i$ servent à ajuster en DQ le coefficient de requantification de la $i^{ème}$ sous-bande de manière telle que :

$$Q^i = \frac{C^i}{2^{n^i-1}}. \tag{2}$$

(En pratique comme on le précisera plus loin, on utilisera le terme $\tilde{C}^i$ dérivant de $C^i$ au lieu de $C^i$ même).

Du dispositif de requantification DQ sortent donc des échantillons $\hat{S}_j^i$ requantifiés.

Le facteur d'échelle de la $i^{ème}$ sous-bande est, quant à lui, défini à l'aide de la relation (3) ci-dessous selon les méthodes de type BCPCM :

$$C^i = \max_{j=1,K'} (|S_j^i|) \tag{3}$$

où K' désigne le nombre d'échantillons contenus dans la $i^{ème}$ sous-bande durant ledit intervalle de temps de durée prédéterminée et j désigne le rang de l'échantillon dans un bloc d'échantillons obtenu dans ladite $i^{ème}$ sous-bande durant ce même intervalle de temps.

On a choisi de découper la bande de fréquences de 0 à 4 KHz en 16 sous-bandes adjacentes (p = 16). (On verra plus loin que l'on peut ignorer les 3 sous-bandes les plus élevées puisque avec 13 sous-bandes on couvre la gamme de fréquences téléphonique 0-3250 Hz). D'autre part, ladite durée prédéterminée a été fixée à 32 ms. Si le signal de l'entrée IN est échantillonné à la fréquence de Nyquist, soit 8 kHz, chaque bloc d'échantillons de 32 ms de durée contient 256 échantillons. Ces échantillons, une fois codés à 12 bits en A/D passent dans le filtre FB et sont répartis entre les seize sous-bandes. Un tel filtre a été décrit dans le brevet français cité plus haut. Ce filtre opère, en plus du filtrage proprement dit, des opérations dites de décimation. Il en résulte que, à la sortie de FB, pour chaque intervalle de temps de durée prédéterminée considéré le nombre des échantillons disponibles sur chacune des seize sous-bandes est :

$$K' = 256/16 = 16$$

Les facteurs d'échelle quantifiés (ou requantifiés) $\hat{C}^i$, que les échantillons $\hat{S}_j^i$ requantifiés sont multiplexés sur une ligne de transmission numérique à l'aide du multiplexeur MPX. Dans ce cas, il faut rajouter des caractères de synchronisation de bloc, de sorte que, à l'autre extrémité de la ligne de transmission, le récepteur puisse identifier les blocs d'échantillons reçus et reconstituer le signal vocal. Ayant choisi de transmettre à 16 kbps, on dispose dont de 512 bits pour 32 ms. Plus on affecte de bits aux données autres que les échantillons de signal proprement dits (caractères de synchronisation et facteurs d'échelle notamment) et moins il en reste pour lesdits échantillons. On va donc essayer de réduire le nombre de bits à affecter au codage des facteurs d'échelle tout en assurant une qualité de codage de haut niveau. Tout d'abord, pour éviter les effets secondaires, du genre échos, dus au fait que les blocs de 32 ms sont sans doute trop longs, comme on l'a indiqué plus haut, on va ajuster la longueur de chaque bloc aux caractéristiques du facteur d'échelle concerné. En d'autres termes, on changera la valeur de $C^i$, plus ou moins souvent, selon que sa variation est lente (bloc stationnaire) ou rapide (bloc transitoire). On a choisi ici de transmettre au maximum deux $C^i$ par sous-bande, ce qui revient à ramener le bloc considéré à deux blocs de 16 ms, lorsque le bloc initial de 32 ms est du type transitoire et un seul $C^i$ par sous-bande, en 32 ms, lorsque le bloc d'échantillons est stationnaire. On détermine donc pour chaque bloc d'échantillons, deux $C^i$ tels que :

$$^1C^i = \max_{j=1\,\text{à}\,8} (|\,S_j^i\,|) \tag{4}$$

et

$$^2C^i = \max_{j=9\,\text{à}\,16} (|\,S_j^i\,|) \tag{5}$$

En d'autres termes, on procède sur les échantillons de chaque sous-bande à des opérations de tri destinées à sélectionner les échantillons ayant la plus grande amplitude durant les 16 premières et les 16 dernières ms de la durée du bloc d'échantillons considéré.

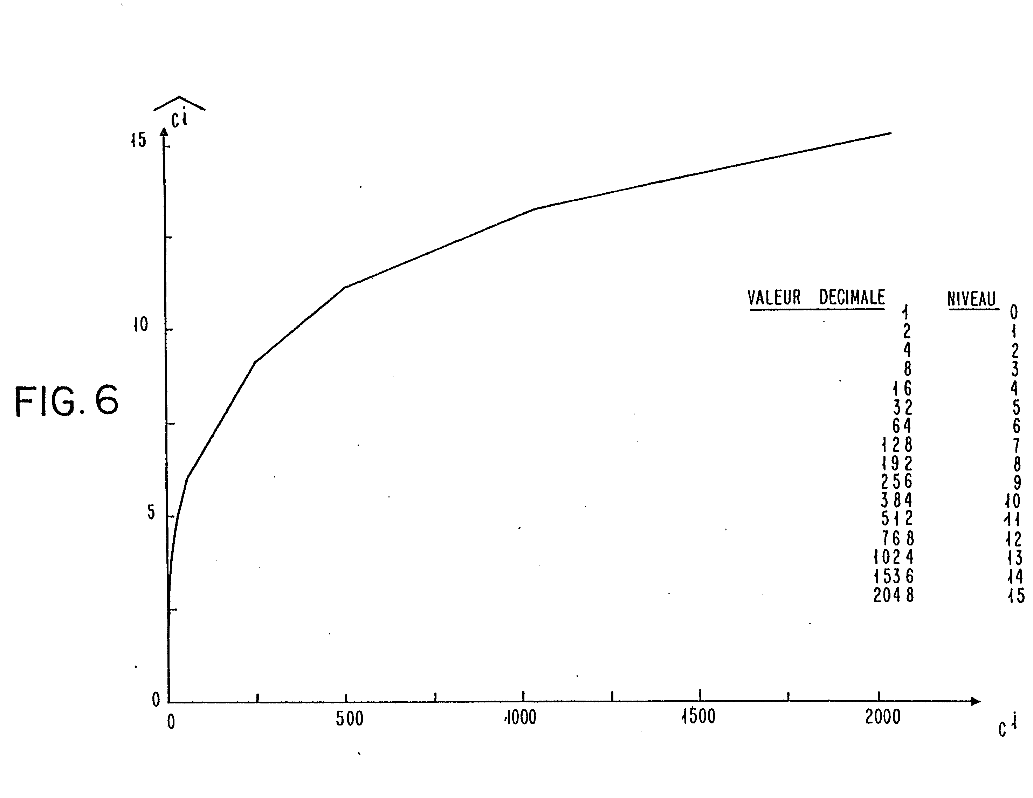

Ensuite on recode $^1C^i$ et $^2C^i$ à quatre bits au lieu de 12 bits en prenant une échelle logarithmique fournissant les termes $^1\hat{C}^i$ et $^2\hat{C}^i$ codés à 4 bits (voir figure 6). L'opération de transcodage de $C^i$ à 12 bits en $\hat{C}^i$ à quatre bits peut être réalisée à l'aide d'une table désignée par T.L.U. qui est constituée par une mémoire qui, adressée par des mots de 12 bits, fournit en sortie des mots de 4 bits. (En pratique, l'opération de transcodage peut être réalisée de façon plus économique à l'aide de tests successifs de type classique). Par exemple, si $C^i = 60$, il est codé à 12 bits par 000000111100. Pour un transcodage à 4 bits on l'assimile à $\tilde{C}^i = 64$, c'est-à-dire le 7ème niveau des valeurs décimales codées en binaire à 12 bits et on le représente à 4 bits par $\hat{C}^i = 0110$.

Pour chaque bloc d'échantillons de 32 ms, on dispose donc de deux $\hat{C}^i$ par sous-bande de signal ce qui représente seize couples de $\hat{C}^i$ pour l'ensemble des p sous-bandes. Chacun de ces couples est alors utilisé pour déterminer la qualité transitoire ou stationnaire du tronçon de signal représenté par le bloc d'échantillons en traitement. Pour ce faire, on détermine les incréments $\Delta\hat{C}^i$ tels que :

$$\Delta\hat{C}^i = {}^1\hat{C}^i - {}^2\hat{C}^i \tag{6}$$

pour i = 1, 2, ..., p

Bien que l'on ait choisi p = 16 pour couvrir la bande de fréquences (0-4000 Hz), lorsque le signal vocal à coder est destiné à être transmis dans la bande téléphonique (300-3200 Hz), on peut ignorer les trois dernières sous-bandes, ce qui revient à conserver les sous-bandes pour lesquelles i = 1, 2, 3, ..., 13.

Les $\Delta\hat{C}^i$ conservés sont alors comparés à des seuils ou valeurs limites, prédéterminés, par exemple + 3 et − 4 qui en décimal seront codés à trois bits. On qualifie alors de transitoire tout bloc d'échantillons pour lequel l'un des $\Delta\hat{C}^i$ est tel que :

$$\begin{cases} \Delta\hat{C}^i > 3 & \tag{7} \\ \Delta\hat{C}^i < 4 & \tag{8} \end{cases}$$

ou

C'est-à-dire $\Delta\hat{C}^i$ en dehors des limites définies par les seuils + 3 et − 4.

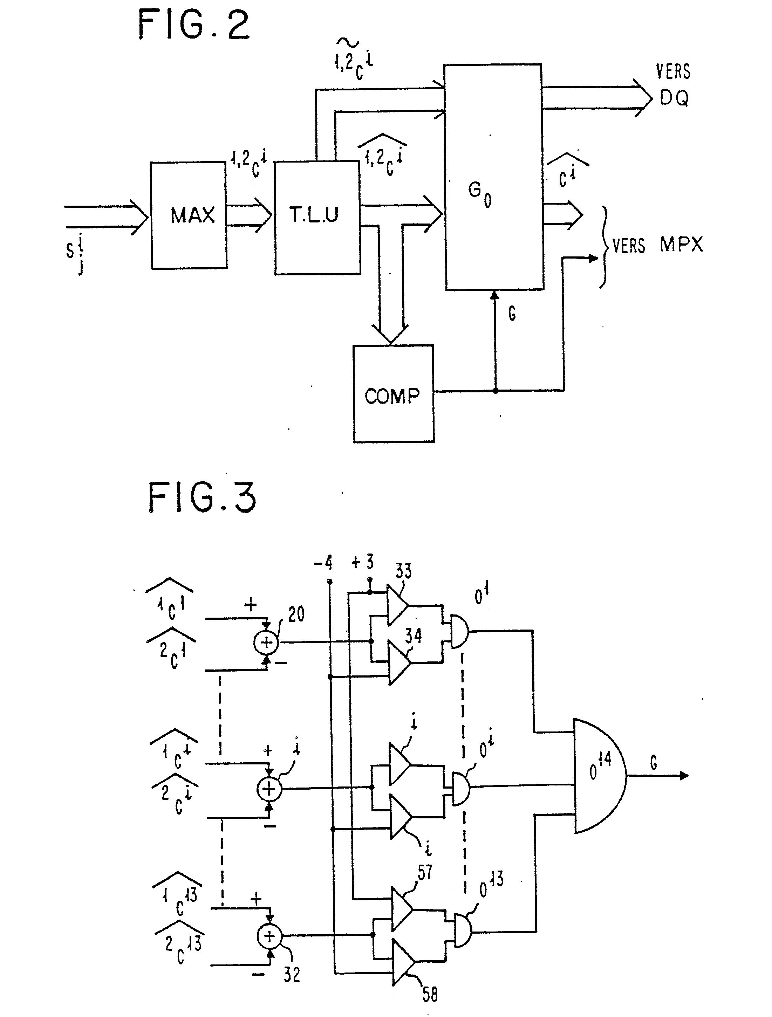

Dans le cas où l'une des conditions (7) ou (8) est satisfaite, on décide de transmettre au multiplexeur PMX les deux valeurs $^1\hat{C}^i$ et $^2\hat{C}^i$ correspondantes. Autrement on ne transmet que le plus grand des deux $\hat{C}^i$, lequel est automatiquement déterminé puisque l'on connaît déjà le signal de $\Delta\hat{C}^i$. Le dispositif PAR de la figure 1, réalisé selon les enseignements du brevet français et de la demande de brevet européen précités, est modifié conformément à la figure 2 en tenant compte des formules citées ci-dessus.

La figure 2 montre un générateur de maximum (MAX) réalisant les opérations (4) et (5). Il peut s'agir de n'importe quel dispositif de tri qui travaillerait en parallèle sur les différentes sous-bandes (par exemple i = 1, 2, ..., 13). Il en ressort, pour chaque sous-bande considérée, deux valeurs de $C^i$, à savoir $^1C^i$ et $^2C^i$ codées à 12 bits puisque les $S_j^i$ ayant servi à l'élaboration des $C^i$ sont codés à 12 bits. La sortie de MAX est envoyée dans le dispositif T.L.U. lequel contient soit une mémoire à lecture directe, soit un dispositif contenant un algorithme de tests successifs. Il ressort de T.L.U. d'une part des couples de $\hat{C}^i$ codés à quatre bits et désignés par $^{1,2}\hat{C}^i$, et d'autre par des couples de $\tilde{C}^i$ codés sur 12 bits et désignés par $^{1,2}\tilde{C}^i$. Ces termes $^{1,2}\tilde{C}^i$ sont transmis à un ensemble de portes Go et à un comparateur COMP. Le comparateur COMP effectue les opérations (6), (7) et (8) et fournit une information G à un bit indiquant si le bloc d'échantillons en traitement est transitoire ou stationnaire. Ce bit G, qui est qualifié de bit de MODE, commande l'ouverture de l'ensemble de portes Go pour laisser passer pour chaque sous-bande soit les deux $^{1,2}\hat{C}^i$ et les deux $^{1,2}\tilde{C}^i$ (si le bloc d'échantillons en traitement est transitoire), soit le plus grand des deux $^1\hat{C}^i$ et $^2\hat{C}^i$ d'une part et le plus grand des deux $^1\tilde{C}^i$ et $^2\tilde{C}^i$ d'autre part si le bloc est stationnaire.

On a représenté sur la figure 3 un circuit logique réalisant les opérations du comparateur COMP. Ce circuit comporte des soustracteurs 20 à 32 déterminant les $\Delta\hat{C}^i$. Un ensemble de comparateurs 33 à 58 compare les $\Delta\hat{C}^i$ aux seuils prédéterminés (− 4 et + 3). Puis des circuits logiques OU désignés par $O^1$ à $O^{14}$ combinent les sorties des comparateurs 33 à 58 pour déterminer si l'un quelconque des $\Delta\hat{C}^i$ est

supérieur à 3 ou inférieur à − 4. Si cela était, la sortie de $O^{14}$ l'indiquerait à l'aide du bit de mode G. Ce bit G est transmis vers le multiplexeur MPX en même temps que les facteurs d'échelle $\hat{C}^i$ sélectionnés. L'importance du bit G est cependant telle qu'en pratique, il est utile de le protéger en lui associant un ou deux bits de protection. On obtient ainsi un caractère dit de MODE, à deux ou trois bits.

Pour faciliter les opérations de décodage, à l'autre extrémité de la ligne de transmission, le récepteur doit pouvoir, à partir d'un train de bits reçu, retrouver les blocs. Pour ce faire, à chaque bloc d'échantillons le multiplexeur MPX associe un caractère prédéterminé, dit de synchronisation. Dans ces conditions, le message définissant un bloc d'échantillons se présente selon le schéma ci-dessous.

| Echantillons | $C^i$ | MODE | SYNCHRO |
|---|---|---|---|

← temps

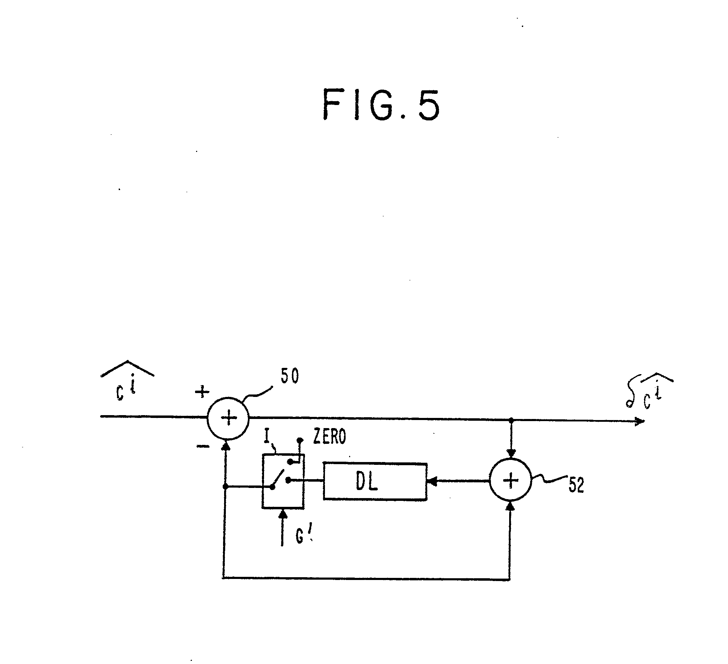

La figure 4 montre un récepteur placé à l'extrémité de la ligne de transmission opposée à celle reliée à la sortie du multiplexeur MPX. Ce récepteur est destiné à reconstituer le signal vocal d'origine. Un récepteur semblable a déjà été décrit dans la demande de brevet européen citée plus haut. Rappelons seulement que le train de bits reçu à l'entrée IN reliée à la ligne de transmission est démultiplexé en DMPX. Ce qui revient à dire que le démultiplexeur DMPX identifie les blocs de données reçus à l'aide du caractère de synchronisation (SYNCHRO) qu'il extrait du message reçu. Il supprime aussi de ce message les bits dits de protection, et il sépare les $\hat{C}^i$ des $\hat{S}_j^i$. Les $\hat{C}^i$ sont transmis à un générateur de paramètres inverse $\overline{PAR}$. Le démultiplexeur DMPX ayant à sa disposition le bit G sait aussi reconnaître s'il vient de recevoir un bloc de 32 ms ou deux blocs de 16 ms. En d'autres termes, il distingue entre blocs stationnaires et blocs transitoires et organise le décodage en conséquence. Les $\hat{C}^i$ sont transmis au générateur inverse $\overline{PAR}$ et les $\hat{S}_j^i$ sont envoyés vers un requantificateur inverse $\overline{DQ}$. Le générateur inverse $\overline{PAR}$, utilise une table telle que T.L.U., mais inverse, pour transcoder de 4 bits en 12 bits. On a choisi de coder à la valeur moyenne, tous les termes $\hat{C}^i$ se trouvant entre deux limites, donc le transcodage fournit des valeurs estimées $\tilde{C}^i$. (Ceci explique aussi pourquoi à l'entrée de DQ on a représenté $\tilde{C}^i$ au lieu de $C^i$). Ayant les $\tilde{C}^i$, le générateur $\overline{PAR}$ en déduit les $n^i$ par la formule (1). A l'aide des $n^i$ et $\tilde{C}^i$, le requantificateur inverse DQ détermine les $Q^i$ (formule 2). Ces derniers termes servent à traiter les $\hat{S}_j^i$ pour en déduire les $\tilde{S}_j^i$, lesquels fournis au banc de filtres inverses $\overline{FB}$, permettent de reconstruire les termes $\tilde{X}_s$ qui, après passage dans un convertisseur numérique analogique D/A fournissent un signal aussi proche que possible du signal vocal initial.

La figure 5 montre un dispositif permettant d'améliorer encore la répartition des bits de codage. On peut en effet noter que le bit G permet de distinguer entre blocs stationnaires et blocs transitoires. On va utiliser ce bit pour contrôler le type de codage à utiliser pour les facteurs d'échelle, notamment en décidant que lorsque deux blocs stationnaires se suivent, ce qui indique que le facteur d'échelle évolue très lentement (et si cette évolution est comprise entre deux seuils prédéterminés, par exemple + 1 et − 2), on codera ce facteur d'échelle $\hat{C}^i$ en différentiel (delta) fournissant $\Delta\hat{C}^i$. On peut imager d'autres types de situations et décider par exemple que lorsqu'un bloc stationnaire suit ou précède un bloc transitoire on pourra aussi utiliser un codage de type différentiel pour le $\hat{C}^i$ et $^1\hat{C}^i$ ou $^2\hat{C}^i$ selon le cas. On traitera à titre d'exemple, le cas où on ne codera en delta que si deux blocs stationnaires se suivent. Lorsqu'un bloc reçu est stationnaire, les $\hat{C}^i$ consécutifs sont envoyés à l'entrée (+) d'un soustracteur 50, dont l'entrée (−) reçoit les $\hat{C}^i$ du bloc précédent. Ces $\hat{C}^i$ précédents proviennent d'une ligne à retard DL de 32 ms. Un additionneur 52 placé à l'entrée de la ligne à retard DL, additionne à la fois la sortie de 50 et la sortie de DL. Ce faisant, on obtient en sortie du soustracteur 50, la variation des $\hat{C}^i$ que l'on peut requantifier, à condition que ladite variation soit comprise entre − 1 et + 2 ce que l'on peut vérifier à l'aide d'un circuit semblable à celui de la figure 3 mais qui fournirait une commande G' au lieu de G. Cette commande devra forcer l'ouverture de la ligne placée à la sortie de DL (interrupteur I sur sa position zéro).

Bien que l'on ait décrit dans ce qui précède et représenté sur les figures, un mode préféré de réalisation de l'invention, l'homme de l'art peut y apporter de nombreuses modifications de forme ou de détail sans pour autant sortir du cadre de ladite invention. Il peut notamment, choisir le procédé de codage décrit ici non pas en vue d'une transmission, mais en vue d'un enregistrement par exemple. Dans un tel cas, il pourra supprimer les caractères dits de synchronisation rajoutés par le multiplexeur et utiliser le système décrit sans grands changements.

**Revendications**

1. Procédé de codage du type BCPCM d'un signal dont le spectre en fréquences s'étend sur une bande prédéterminée et relativement limitée, et selon lequel le signal à coder est échantillonné de manière à fournir un flot d'échantillons consécutifs, ledit flot étant découpé en tronçons successifs de durée prédéterminée, chaque tronçon contenant un bloc d'échantillons à coder à l'aide d'un nombre de bits prédéterminé, ledit procédé étant caractérisé en ce qu'il comporte les opérations suivantes :

détermination à partir de chacun desdits blocs d'échantillons, d'un nombre prédéterminé de facteurs d'échelle individuellement définis conformément aux méthodes de type BCPCM, ledit nombre prédéterminé étant supérieur à un ;

comparaisons desdits facteurs d'échelle obtenus à partir d'un même bloc d'échantillons de manière à en déduire, pour chaque tronçon de signal, une information relative à l'amplitude de variation desdits facteurs d'échelle comparés ;

identification du bloc d'échantillons en bloc transitoire ou en bloc stationnaire selon que ladite amplitude de variation des facteurs d'échelle du bloc considéré se trouve à l'extérieur ou à l'intérieur de valeurs limites prédéterminées ;

choix du nombre de facteurs d'échelle à conserver pour le bloc considéré selon son identification ;

détermination du nombre de bits nécessaire au codage du (ou des) dits facteurs d'échelle du bloc considéré ;

détermination du nombre de bits restant disponibles pour la quantification des échantillons du bloc considéré ; et

codage du (ou des) dit(s) facteurs d'échelle et des échantillons du bloc considéré.

2. Procédé de codage d'un signal dont la bande de fréquences initiale est scindée en plusieurs sous-bandes, le contenu de chaque sous-bande étant destiné à être codé selon le type dit BCPCM avec répartition dynamique des bits de codage disponibles entre les diverses sous-bandes, ledit procédé étant caractérisé en ce qu'il comporte les opérations suivantes :

détermination dans chaque sous-bande, et à partir de chaque bloc d'échantillons que ladite sous-bande contient d'au moins deux facteurs d'échelle déterminés selon le procédé BCPCM ;

comparaison entre eux des facteurs d'échelle de chaque sous-bande de manière à déduire une information relative à l'amplitude de variation des facteurs d'échelle comparés ;

identification du bloc d'échantillons de l'ensemble des sous-bandes en bloc transitoire ou en bloc stationnaire selon que ladite amplitude de variations pour l'une quelconque desdites sous-bandes, se trouve à l'extérieur ou à l'intérieur de valeurs limites prédéterminées ;

choix du nombre de facteurs d'échelles à conserver pour le bloc d'échantillons considéré selon l'identification dudit bloc ;

détermination du nombre de bits nécessaires au codage desdits facteurs d'échelle en fonction du nombre de facteurs d'échelle retenu pour le bloc considéré ;

détermination du nombre de bits restant disponibles pour la quantification des échantillons du bloc considéré ; et

quantification des facteurs d'échelle et des échantillons du bloc considéré.

3. Procédé de codage selon l'une des revendications 1 ou 2 caractérisé en outre en ce qu'il comporte l'utilisation d'un caractère dit de MODE permettant d'identifier le bloc d'échantillons considéré comme stationnaire ou comme transitoire.

4. Procédé de codage à l'aide d'un nombre de bits prédéterminé d'un signal dont la bande de fréquences initiale est scindée en p sous-bandes contenant des échantillons codés à l'aide d'un nombre de bits prédéterminé relativement élevé, et destinés à être requantifiés par blocs et selon une méthode de répartition dynamique des bits de requantification en fonction de l'énergie du signal contenu dans chacune desdites sous-bandes, ledit procédé étant caractérisé en ce qu'il comporte les opérations suivantes :

détermination à partir de chaque bloc d'échantillons dans chaque sous-bande d'au moins deux facteurs d'échelle $^1C^i$ et $^2C^i$ obéissant aux relations :

$$^1C^i = \max_{j = 1 \, \text{à} \, K'/2} (|\, S_j^i \,|)$$

et

$$^2C^i = \max_{j = (K'/2) + 1 \, \text{à} \, K'} (|\, S_j^i \,|)$$

où $K'$ est le nombre d'échantillons par sous-bande et par bloc d'échantillons,

$S_j^i$ représente les échantillons de sous-bandes avec i et j étant des indices indiquant, respectivement le rang de la sous-bande considérée et le rang de l'échantillon dans le bloc considéré ;

recodage desdits facteurs d'échelle $^1C^i$ et $^2C^i$ à un taux de bits inférieur, engendant ainsi $^1\hat{C}^i$ et $2\hat{C}^i$ ;

détermination de l'incrément $\Delta\hat{C}^i$ tels que :

$$\Delta\hat{C}^i = {}^1\hat{C}^i - {}^2\hat{C}^i$$

pour chaque sous-bande ;

comparaison de chacun desdits incréments à un premier et à un second seuil ;

identification du bloc d'échantillons considéré, pour l'ensemble de p sous-bandes, en bloc transitoire ou stationnaire selon le résultat de ladite comparaison ;

7

conservation de l'un ou des deux $\Delta\hat{C}^i$ selon ladite identification ;

détermination du nombre de bits restant disponible pour la requantification dynamique des échantillons $X_j^i$ de manière telle que :

$$Q^i = \frac{\tilde{C}^i}{2^{n^i - 1}}$$

et

$$n^i = 1/P\left(N - \sum_{j=1}^{p} \log \tilde{C}^j\right) + \log \tilde{C}^i$$

où $Q^i$ est le coefficient de requantification des échantillons de la $i^{\text{ème}}$ sous-bande, $n^i$ le taux de bits correspondant et N le nombre total de bits de requantification des échantillons pour l'ensemble des p sous-bandes.

5. Procédé de codage selon la revendication 4 caractérisé en outre en ce que ledit recodage des facteurs d'échelle $^1C^i$ et $^2C^i$ utilise une échelle logarithmique.

6. Procédé de codage selon la revendication 5 caractérisé en ce que ladite échelle logarithmique permet un recodage à quatre bits des facteurs d'échelle $^1C^i$ et $^2C^i$ initialement codés à 12 bits.

7. Dispositif de transmission de type multiplex d'un signal d'origine vocale s'étendant sur une bande de fréquences donnée et destiné à la mise en œuvre du procédé selon l'une des revendications 1 à 6, ledit dispositif étant comportant :

un dispositif (A/D) d'échantillonnage et de codage des échantillons à un taux de bits relativement élevé alimenté par ledit signal d'origine vocale ;

un banc de filtres (FB) relié audit dispositif d'échantillonnage ;

un générateur de paramètres (PAR) relié audit banc de filtres et engendrant notamment lesdits termes $\tilde{C}^i$ et $n^i$ ;

un dispositif de requantification (DQ) relié audit banc de filtres et générateur de paramètres ; et,

un dispositif multiplexeur (MPX) relié auxdits générateurs de paramètres et dispositif de requantification ;

ledit dispositif de transmission étant caractérisé en ce que le générateur (PAR) comporte en outre une table (T.L.U) permettant de transcoder les facteurs d'échelle à un taux de bits inférieur, un dispositif de comparaison permettant de comparer entre eux les facteurs d'échelle dérivés d'un même bloc d'échantillons et de déterminer le caractère stationnaire ou transitoire du bloc d'échantillons considéré et d'en déduire, le nombre de facteurs d'échelle à conserver pour ledit bloc.

8. Dispositif de transmission selon la revendication 7 caractérisé en ce que ledit générateur de paramètres (PAR) comporte en outre des moyens pour engendrer une information (G) dite de MODE transmise au dispositif multiplexeur.

**Claims**

1. A BCPCM method of coding a signal whose spectrum extends over a predetermined, relatively limited frequency band, wherein the signal to be coded is sampled so as to provide a stream of consecutive samples, said stream being split into successive segments of predetermined duration each of which contains a block of samples to be coded by using a predetermined number of bits, said method being characterized in that it comprises the steps of :

determining from each of said blocks of samples a predetermined number of scale factors individually defined in accordance with BCPCM-type techniques, said predetermined number being larger than unity ;

comparing said scale factors obtained from a given block of samples to derive therefrom, for each signal segment, an information item relating to the amplitude of the variation of the scale factors so compared ;

identifying the block of samples either as a transient block or as a non-transient block depending on whether said amplitude of the variation of the scale factors for the block considered lies outside or within a predetermined range of values ;

selecting the number of scale factors to be retained for the block considered according to the identification thereof ;

determining the number of bits required to code said scale factor(s) for the block considered ;

determining the number of bits that remain available for quantizing the samples of the block considered ; and

coding said scale factor (s) and samples of said block.

2. A method of coding a signal whose initial frequency band is split into several sub-bands the content of each of which is to be coded in accordance with the BCPCM technique, with the available

**0 064 119**

coding bits being dynamically allocated among said sub-bands, said method being characterized in that it comprises the steps of :

determining from each block of samples contained in each sub-band at least two scale factors obtained in accordance with the BCPCM technique ;

comparing with each other the scale factors in each sub-band to derive an information item relating to the amplitude of the variations of the scale factors so compared ;

identifying the block of samples of all sub-bands either as a transient block or as a non-transient block depending on whether said amplitude of the variations of any one of said sub-bands lies outside or within a predetermined range of values ;

selecting the number of scale factors to be retained for the block considered according to the identification thereof ;

determining the number of bits required to code said scale factor (s) according to the number of scale factors retained for the block considered ;

determining the number of bits that remain available for quantizing the samples of the block considered ; and

quantizing the scale factors and the samples of the block considered.

3. A method of coding according to claim 1 or 2, further characterized in that it includes using a so-called Mode character for identifying the block of samples considered, either as a non-transient block or as a transient block.

4. A method of coding, by means of a predetermined number of bits, a signal whose initial frequency band is split into p sub-bands containing samples coded by meansof a predetermined, relatively large number of bits, and which are to be requantized by blocks in accordance with a technique whereby the requantizing bits are dynamically allocated as a function of the energy of the signal contained in each of said sub-bands, said method being characterized in that it comprises the steps of :

determining from each block of samples in each sub-band at least two scale factors $^1C^i$ and $^2C^i$ that satisfy the following relations :

$$^1C^i = \max_{j=1 \text{ to } K'/2} (| S_j^i |)$$

and

$$^2C^i = \max_{j=(K'/2)-1 \text{ to } K'} (| S_j^i |)$$

where $K'$ is the number of samples per sub-band and per block of samples, and

$S_j^i$ represents the sub-band samples, with i and j being indices denoting, respectively, the rank of the sub-band concerned ant the rank of the sample in the block concerned ;

recoding said scale factors $^1C^i$ and $^2C^i$ at a lower bit rate, thereby generating $^1\hat{C}^i$ and $^2\hat{C}^i$ ;

determining the increment $\Delta\hat{C}^i$ such that

$$\Delta\hat{C}^i = {}^1\hat{C}^i - {}^2\hat{C}^i$$

for each sub-band ;

comparing each of said increments with a first and a second threshold ;

identifying the block of samples considered, for the p sub-bands, as a transient or as a non-transient block according to the result of said comparison ;

retaining either or both $\Delta\hat{C}^i$ according to said indentification ; and

determining the number of bits that remain available for dynamically requantizing samples $X_j^i$ such that

$$Q^i = \frac{\tilde{C}^i}{2^{n^i-1}}$$

and

$$n^i = 1/P \left( N - \sum_{j=1}^{p} \log \tilde{C}^j \right) + \log \tilde{C}^i$$

where $Q^i$ is the requantizing coefficient for the samples in the $i^{th}$ sub-band, $n^i$ is the corresponding bit rate, and N is the total number of requantizing bits for the samples in all of said p sub-bands.

5. A coding method according to claim 4, further characterized in that a logarithmic scale is used for recoding said scale factors $^1C^i$ and $^2C^i$.

6. A coding method according to claim 5, characterized in that said logarithmic scale enables scale factors $^1C^i$ and $^2C^i$ initially coded with twelve bits to be recoded by means of four bits.

9

**0 064 119**

7. A multiplex transmission device for transmitting a voice signal extending over a given frequency range for implementing the method according to any one of claims 1 to 6, said device comprising :

a device (A/D) to which said voice signal is applied and which samples the signal and codes the samples at a relatively high bit rate ;

a bank of filters (FB) connected to said sampling device ;

a parameter generator (PAR) connected to said bank of filters and generating, in particular, said terms $\bar{C}^i$ and $n^i$ ;

a requantizing device (DQ) connected to said bank of filters and said parameter generator ; and

a multiplexing device (MPX) connected to said parameter generator and said requantizing device ;

said transmission device being characterized in that said generator (PAR) further includes a table (TLU) for transcoding the scale factors at a lower bit rate, a comparator for comparing the scale factors derived from the same block of samples with one another and for determining the non-transient or transient nature of the block of samples considered to derive therefrom the number of scale factors to be retained for said block.

8. A transmission device according to claim 7, characterized in that said parameter generator (PAR) further includes means for generating so-called Mode information (G) transmitted to said multiplexing device.


**Patentansprüche**

1. Sprachkodierungsverfahren des Typs BPCM fuer ein Signal, dessen Frequenzspektrum sich in einem vorbestimmten und verhaeltnismaessig begrenzten Frequenzband befindet, wo aus diesem zu kodierenden Signal Abtastwerte diesem Verfahren entsprechend derartig entnommen sind, dass sich ein Fluss von hintereinander auftretenden Abtastwerten ergibt, wobei dieser Fluss in aufeinanderfolgenden Abschnitten jeweils mit einer vorbestimmten Zeitdauer eingeteilt ist, wobei jeder Abschnitt einen Block von mit Hilfe einer vorbestimmten Anzahl von Bits zu kodierenden Abtastwerten enthaelt, wo dieses Verfahren dadurch gekennzeichnet ist, dass es folgende Schritte aufweist :

Festlegung einer vorbestimmten Anzahl von Masstabfaktoren auf Grund von jedem Abtastwerten-Block, indem diese Masstabfaktoren den Sprachkodierungsmethoden entsprechend individuell festgelegt sind, wobei die genannte vorbestimmte Anzahl ueber eins liegt ;

mehrfacher Vergleich der einem gleichen Abtatstwerten-Block entsprechenden Masstabfaktoren, so dass bei jedem Signalabschnitt eine Information bezueglich der Amplitude der Ungleichheit der verglichenen Masstabfaktoren hergeleitet wird ;

Identifizierung des Abtastwerten-Blocks als Uebergangsblock oder stationaerer Block in Abhaengigkeit davon, dass die Amplitude der Ungleichheit der Masstabfaktoren fuer den betreffenden Block ausserhalb oder innerhalb vorbestimmter Grenzwerten liegt ;

Auswahl der Anzahl von Masstabfaktoren, die fuer den betreffenden Block jenach seiner Identifizierung zu behalten sind ;

Festlegung der Anzahl von Bits, die zur Kodierung des oder der sogenannten Masstabfaktoren fuer den betreffenden Block erforderlich sind ;

Festlegung der Anzahl von Bits, die fuer die Quantifizierung der Abtastwerte in dem betreffenden Block verfuegbar sind ;

Kodierung des oder der Masstabfaktoren und der Abtastwerte in dem betreffenden Block.

2. Sprachkodierungsverfahren eines Signals, dessen anfaengliche Frequenzband in mehreren Unterbaenden unterteilt ist, wo der Inhalt jedes Unterbands mittels des BPCM-Verfahrens mit einer dynamischen Verteilung der fuer die Kodierung verfuegbaren Bits zwischen den verschiedenen Unterbaenden kodiert werden soll, dadurch gekennzeichnet, dass dieses Verfahren die folgenden Vorgaenge aufweist :

Festlegung von mindestens zwei dem BPCM-Verfahren entsprechenden gewonnenen Masstabfaktoren bei jedem Unterband und auf Grund von jedem Abtastwerten-Block, der in dem jeweiligen Unterband enthalten ist ;

Vergleich der Masstabfaktoren fuer jedes Unterband mit den Masstabfaktoren fuer die anderen Unterbaende, so dass eine Information bezogen auf die Amplitude der Ungleichheit der verglichenenen Masstabfaktoren hergeleitet wird ;

Identifizierung des Abtastwerten-Blocks fuer die gesamten Unterbaende als Uebergangsblock oder stationaerer Block in Abhaengigkeit davon, dass die Amplitude der Ungleichheit in irgendeinem der Unterbaende ausserhalb oder innerhalb von vorbestimmten begrenzten Werten sich befindet ;

Auswahl der Anzahl von Masstabfaktoren, die in dem betreffenden Abtastwerten-Block jenach seiner Identifizierung zu behalten sind ;

Festlegung der Anzahl von Bits, die zur Kodierung der Masstabfaktoren in Abhaengigkeit von der dem betreffenden Block zugeordneten Anzahl von Masstabfaktoren erforderlich sind ;

Festlegung der Anzahl von Bits, die fuer die Quantifizierung der Abtastwerten in dem betreffenden Block verfuegbar sind ;

Quantifizierung der Masstabfaktoren und der Abtastwerte in dem betreffenden Block.

10

3. Sprachkodierungsverfahren gemaess einem der Ansprüche 1 und 2, dadurch weiterhin gekennzeichnet, dass es noch die Zuordnung eines Charakters, bezogen auf die BETRIEBSART, aufweist, wo dieses Charakter die Identifizierung des Abtastwerten-Blocks, der als Uebergangsblock oder stationaerer Block angenommen ist, ermoeglicht.

4. Sprachkodierungsverfahren mit Hilfe einer vorbestimmten Anzahl von Bits fuer ein Signal, dessen anfaengliche Frequenzband in p Teilbaenden unterteilt ist, die die Abtastwerte enthalten, die mit Hilfe einer vorbestimmten und verhaeltnismaessig groessen Anzahl von Bits kodiert und zur Requantifizierung in Bloecken einer Methode fuer die dynamische Bits-Verteilung in Abhaengigkeit von der Energie des in jedem Unterband enthaltenen Signals bezweckt sind, wobei das Verfahren dadurch gekennzeichnet ist, dass es die folgenden Schritte aufweist :

Festlegung von mindestens zwei Masstabfaktoren $^1C^i$ und $^2C^i$ auf Grund jedes Abtastwerten-Blocks in jedem Unterband, wo diese Masstabfaktoren den Beziehungen entsprechen :

$$^1C^i = \max_{j = 1 \, bis \, K'/2} (| S_j^i |)$$

und

$$^2C^i = \max_{j = (K'/2) + 1 \, bis \, K'} (| S_j^i |)$$

wo k' die Anzahl von Abtastwerten in jedem Unterband und in jedem Abtastwerten-Block ist,

$S_j^i$ die Abtastwerte in den Unterbaenden darstellt, mit i und j als Indizien, die jeweils die Stufenreihe des betreffenden Unterbandes und die Stufenreihe des Abtastwerts in dem betreffenden Block angeben ;

Rekodierung der Masstabfaktoren $^1C^i$ und $^2C^i$ in einer niedrigen Bitrate, so dass $^1\hat{C}^i$ und $^2\hat{C}^i$ entstehen ;

Festlegung des Inkrements $\Delta\hat{C}^i$, so dass :

$$\Delta\hat{C}^i = {}^1\hat{C}^i - {}^2\hat{C}^i$$

bei jedem Unterband ;

Vergleich von jedem Inkrement bei einer ersten und einer zweiten Schwelle ;

Identifizierung des betreffenden Abtastwerten-Blocks bezogen auf die gesamten Unterbaende, als ein Uebergangsblock oder ein stationaerer Block jenach dem Ergebnis des Vergleichs ;

Behalten von einen m der zwei Inkremente $\Delta\hat{C}^i$ jenach der Identifizierung ;

Festlegung der Anzahl von Bits, die fuer die dynamische Requantifizierung der Abtastwerte X verfuegbar sind, so dass :

$$Q^i = \frac{\tilde{C}^i}{2^{n^i - 1}}$$

und

$$n^i = 1/P\left(N - \sum_{j=1}^{p} \log \tilde{C}^j\right) + \log \tilde{C}^i$$

wo $Q^i$ der Koeffizient fuer die Requantifizierung der Abtastwerte in dem $i^{ten}$ Unterband, $n^i$ die entsprechende Bitrate und N die Summe der Bits fuer die Requantifizierung der Abtastwerte bezogen auf die gesamten p Unterbaende ist.

5. Sprachkodierungsverfahren gemaess Anspruch 4, weiterhin dadurch gekennzeichnet, dass die Rekodierung der Masstabfaktoren $^1C^i$ und $^2C^i$ einen logarithmischen Masstab verwendet.

6. Sprachkodierungsverfahren gemaess Anspruch 5, weiterhin dadurch gekennzeichnet, dass der logarithmische Masstab eine 4-Bits-Rekodierung fuer die Masstabfaktoren $^1C^i$ und $^2C^i$ anstelle deren anfaenglichen 12-Bits-Kodierung ermoeglicht.

7. Einrichtung fuer die Multiplex-Uebertragung eines anfangs stimmhaften Signals, das sich in einem bestimmten Frequenzband befindet, und zur Durchfuehrung des Sprachkodierungsverfahrens gemaess einem der Ansprüeche 1 bis 6, wo diese Einrichtung aufweist :

eine Anordnung (A/D) zur Probenahme des Signals und zur Kodierung der Abtastwerte in einer verhaeltnismaessig hoehen Bitrate, wo der Anordnung das stimmhafte Signal zugefuehrt ist ;

eine Filterbank (FB), die mit der Probenahme-Anordnung verbunden ist ;

ein Parameter-Generator (PAR), der mit der Filterbank verbunden ist und naemlich die Terme $\tilde{C}^i$ und $n^i$ erzeugt ;

einer Anordnung zur Requantifizierung (DQ), die mit der Filterbank und dem Parametergenerator verbunden ist ; und

eine Multiplexanordnung (MPX), die mit dem Parameter-Generator und der Requantifizierungsanordnung verbunden ist ;

wobei die Einrichtung fuer die Multiplex-Uebertragung dadurch gekennzeichnet ist, dass der Generator (PAR) ausserdem eine Tabelle (T.L.U.) zur Umsetzung der Masstabfaktoren in einer niedrigen Bitrate, eine Vergleichsanordnung zum Vergleich der von einem gleichen Abtastwerten-Block hergeleiteten Masstabfaktoren zwischen ihnen und zur Festlegung des Uebergangstyps oder des stationaeren Typs des betreffenden Abtastwerten-Blocks und daraus zur Bestimmung der Anzahl von Masstabfaktoren aufweist, welche fuer diesen Block zu behalten sind.

8. Einrichtung fuer die Multiplex-Uebertragung gemaess Anspruch 7, dadurch gekennzeichnet, dass der Parameter-Generator (PAR) ausserdem Mittel zur Erzeugung einer auf die BETRIEBSART bezogenen Information (G) aufweist, die der Einrichtung fuer die Multiplex-Uebertragung zugefuehrt ist.

# FIG. 1

$$\hat{s_j^i}$$

$$\hat{c^i}$$

IN → A/D → $X_S$ → FB → $n^i$ → PAR → $\tilde{c^i}$ → DQ → $\hat{s_j^i}$ → MPX → OUT

G

# FIG. 4

$$\hat{c^i}$$

$$\overline{PAR}$$

$$\tilde{c^i}$$

IN → DMPX → G → $n^i$ → $\overline{DQ}$ → $\tilde{s_j^i}$ → $\overline{FB}$ → $\tilde{X_S}$ → D/A → OUT

$$\hat{s_j^i}$$

# FIG.2

# FIG.3

# FIG.5

FIG. 6

| VALEUR | DECIMALE | | NIVEAU |
|---|---|---|---|
| | | 1 | 0 |
| | | 2 | 1 |
| | | 4 | 2 |
| | | 8 | 3 |
| | 1 | 6 | 4 |
| | 3 | 2 | 5 |
| | 6 | 4 | 6 |
| | 1 2 | 8 | 7 |
| | 1 9 | 2 | 8 |
| | 2 5 | 6 | 9 |
| | 3 8 | 4 | 10 |
| | 5 1 | 2 | 11 |
| | 7 6 | 8 | 12 |
| | 1 0 2 | 4 | 13 |
| | 1 5 3 | 6 | 14 |
| | 2 0 4 | 8 | 15 |

0 064 119